**Europäisches Patentamt**

**European Patent Office**

**Office européen des brevets**

(19)

(11) Publication number: **0 385 053 B1**

## EUROPEAN PATENT SPECIFICATION

(45) Date of publication of patent specification: **27.07.94**   (51) Int. Cl.5: **D06N 1/00**, C08L 91/04

(21) Application number: **89830082.7**

(22) Date of filing: **28.02.89**

(54) **Method for production of linoleum.**

(43) Date of publication of application:
**05.09.90 Bulletin 90/36**

(45) Publication of the grant of the patent:
**27.07.94 Bulletin 94/30**

(84) Designated Contracting States:
**AT BE CH DE ES FR GB GR LI LU NL SE**

(56) References cited:
DE-A- 1 056 578     DE-A- 1 092 189
FR-A- 1 111 542     GB-A- 338 965
GB-A- 518 239       GB-A- 692 444
GB-A- 855 209       US-A- 2 252 398

(73) Proprietor: **MONDO S.p.A.**
**Via Arcivescovado, 5**
**I-10121 Torino(IT)**

(72) Inventor: **Stroppiana, Fernando**
**Via Alba/Narzole, 7**
**I-12055 Diano d'Alba (Cuneo)(IT)**

(74) Representative: **Bosotti, Luciano et al**
**c/o Jacobacci-Casetta & Perani S.p.A.**
**Via Alfieri, 17**
**I-10121 Torino (IT)**

EP 0 385 053 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a method for the production of sheet covering of the linoleum type, including the steps of oxidising a natural oil, adding to the oxidized oil additives selected from the group consisting of colophony, calcium carbonate, cork, wood flour and titanium oxide, and calendering upon a backing sheet the paste obtained to form a sheet product.

The oxidised natural oil (linoxyn when one starts from linseed oil) has a rubbery consistency and is called "linoleum cement". The cement has additives added to it so as to form a paste which is applied by means of a calender to a backing fabric, normally of jute. The sheet product must subsequently be seasoned by heating for 20 to 30 days in a suitable oven in which the product assumes its final consistency.

The seasoning step predominates over all the other steps for making the product as it requires a long stationary period for the product, to the detriment of the final cost.

Moreover, during heat-seasoning (at about 90°C), the natural oxidation-cross-linking process involves solely the two outer faces of the sheet product, that is, the visible surface and the undersurface where it normally impregnates the jute fabric. In other words, the product is not homogeneous and the removal of the surface film reveals a more malleable paste which is softer and has poorer qualities of wear than the surface.

In the method of the invention as called for in claim 1, and in a manner known per se, e.g. from GB-A-338 965, GB-A- 855 209, US-A- 2 252 398, DE-A- 1 092 189 or DE-A- 1 056 578, additives are added to the paste obtained from the oxidized natural oil before calendering, such additives being cross-linking and accelerating agents, and, after calendering, the sheet product is heated for a time sufficient to cure it.

The oxidation-cross-linking of the sheet product is thus "piloted" by the use of cross-linking systems similar to those used in rubber technology.

Examples of the natural starting oils used and subjected to oxidation are linseed oil, fish oil, wood oil, grape-pip oil, hempseed oil, and tomato-seed oil. The steps for the conventional production of linoleum will not be described in detail here since they are well known to experts in the art.

As indicated, in the present invention, to the normal additives added to the so-called cement before calendering (mineral fillers, cork, wood, pigments etc.), there is added a suitable mixture of accelerating and cross-linking agents (cross-linking system) adapted to ensure vulcanisation after calendering.

Among the accelerants and cross-linking agents which may be used in the method of the invention are the following inorganic compounds: sulphur chloride, sulphur, zinc, zinc oxide, iron oxide, magnesium oxide, lead oxide, antimony oxide, chromium oxide, calcium oxide, ammonia.

Among the organic accelerating-cross-linking agents which may be used to advantage are the following: N-cyclohexyl-2-benzothiazylsulphenamide; (N,N')-diphenyl-guanidine; dibenzothiazyl disulphide; tetramethylthiuram monosulphide; tetraethylthiuram disulphide; N-dicyclohexyl-2-benzothiazylsulphenamide; N,N'-diorthotolylguanidine; N-oxydiethylenbenzothiazylsulphenamide; 2-(4-morpholinyl)-mercaptobenzothiazole; 2-mercaptobenzothiazole; zinc 2-mercaptobenzothiazole; tetramethylthiuram disulphide; zinc dibutyldithiocarbamate; zinc diethyldithiocarbamate; zinc dimethyldithiocarbamate; sodium dibutyldithiocarbamate; sodium dimethyldithiocarbamate; tetrabutylthiuram disulphide; diphenyldiethylthiuram disulphide; 2-mercaptoimidazoline; diethylthiourea; N,N'-diisopropyl-2-benzothiazylsulphenamide; zinc N-ethylphenyldithiocarbamate; zinc N'-pentamethylene-dithiocarbamate; 4,4'-dithiodimorpholine; 2-benzothiazolyl-N,N'-diethylthiocarbamylsulphide; N-tert-butyl-2-benzothiazolsulphenamide; N-cyclohexyl-2-benzothiazolsulphenamide; zinc dithiocarbamates; ; amines; thiourea; isocyanates; bis-2-4-dichlorodibenzoylperoxide; N-nitrosodiphenylamine; phthalic anhydride; benzoic acid; stearic acid; organic peroxides such as alkylaralkyl, aralkyl, dialkyl, diaralkyl, diaryl benzoyl, dibenzoyl, 2,4-dichlorodibenzoyl, tertiary dibutyl, dicumyl, tertiary butylcumyl peroxides; condenstation products of acrolein homologs and aromatic bases; tricrotonylidenetetramine; hexamethylene tetramine; cyclohexylethylamine; polyethylene-polyamine; diphenylthiourea; organic salts of lead; dimer of 2,4-toluylendiisocyanate; hydroquinone dioxyethyl ether.

Preferably, the accelerating and cross-linking agents are selected from the group consisting of calcium oxide, active zinc, zinc oxide, stearic acid, sulphur, N-cyclohexyl-2-benzothiazylsulphenamide, tetraethylthiuram disulphide, di-(2,2'-benzo-thiazolyl-) disulphide, tetramethylthiuram monosulphide, (N,N')-diphenyl-guanidine and 4,4' - dithiodimorpholine.

After the calendering of the product, the latter is heated to a high temperature and subjected to a compression cycle so that, with the curing, it acquires the necessary mechanical characteristics and resistance to abrasion.

A specific object of the present invention is to eliminate the backing fabric, for example, of jute or a synthetic textile (nylon, polyester or the like), to which the paste must be applied to give the product the

2

necessary strength.

In that respect, the disclosure of GB-A- 692 444 is of interest for the invention.

The paste obtained cannot in fact be calendered without the aid of the backing fabric and the sheet product without the backing fabric would not have the mechanical properties which would allow the subsequent working steps. One thinks, for example, of the loading of the sheet product into suitable maturing silos where the product is suspended from suitable supporting tolls at a height of several metres from the ground, so as to create a festoon of the sheet with a height of up to 20 metres; without the supporting web the sheet would tear.

As well as the additional cost of the other ingredients of the linoleum, the use of the backing fabric considerably complicates the production and gives the finished product poor flexibility which, for example, makes it more difficult to lay on a floor than rubber coverings.

According to the invention as called for in the claims, these disadvantages are eliminated.

The cross-linking reactions which occur in the backing sheet during vulcanisation also involve the region in which the backing sheet itself is joined to the sheet product obtained from the linoleum paste, thus allowing "chemical" bonding between the two component layers of the finished product.

This bonding is particularly strong if the linoleum paste has cross-linking and accelerating agents added to it before calendering, as described above.

Indeed, by coupling through calendering a backing sheet based on a vulcanisable elastomeric material to a sheet product obtained from a linoleum paste to which cross-linking and accelerating agents have been added, it is possible to vulcanise the backing sheet and the linoleum layer simultaneously and thus ensure that the coupled product is "monolithic" and has considerable mechanical strength.

Specifically the invention provides for the manufacture of a backing sheet including, as well as vulcanisable elastomeric material, a linoleum paste with cross-linking and accelerating additives. Vulcanisable linoleum paste of the type identical or similar to that subsequently coupled to the backing sheet may be mixed with the vulcanisable elastomeric material up to an amount at which the backing sheet still has sufficient mechanical strength.

As well as eliminating the reinforcing fabric from the linoleum production, the use of the backing sheet ensures the cohesion of the linoleum in a manner similar to that achieved with the fabric of jute or the like and enables the linoleum to be stabilised while minimising the shrinkage of linoleum obtained by to the conventional method.

Moreover, by virtue of the presence of the backing layer of elastomeric material or at least containing a percentage of elastomeric material, one has the advantage of ease of laying on the floor since the product is more flexible.

A further advantage relates to the barrier effect ensured by the backing sheet which prevents moisture in the floor on which the sheet product is laid from damaging the linoleum itself.

The elastomeric material usable as the component of the backing sheet may be selected from natural rubber and synthetic elastomers. All the waste from the working, suitably minced and ground, may to advantage be incorporated in the rubber based backing sheet and possibly in a vulcanisable linoleum paste.

Further characteristics and advantages of the invention will become apparent from the appended examples, which are not to be interpreted in a limiting manner, and from the appended drawings, in which:

- Figure 1 is a diagrammatic view illustrating the method of the invention,
- Figure 2 is a detail of Figure 1 on an enlarged scale,
- Figure 3 is a diagrammatic side view of a continuous heating press used in the method of the invention downstream of the calender,
- Figure 4 is a diagrammatic side view of another type of continuous press usable in the method of the invention, and
- Figure 5 is a diagrammatic view of a hot-air circulating oven usable for vulcanising the sheet product.

With reference to the drawings, an extruder 1 supplies a vulcanisable (curable) material 2 to a first calender 3. The vulcanisable material 2 is a mixture of linoleum cement and synthetic or natural elastomeric polymers, as will become clear from the following examples.

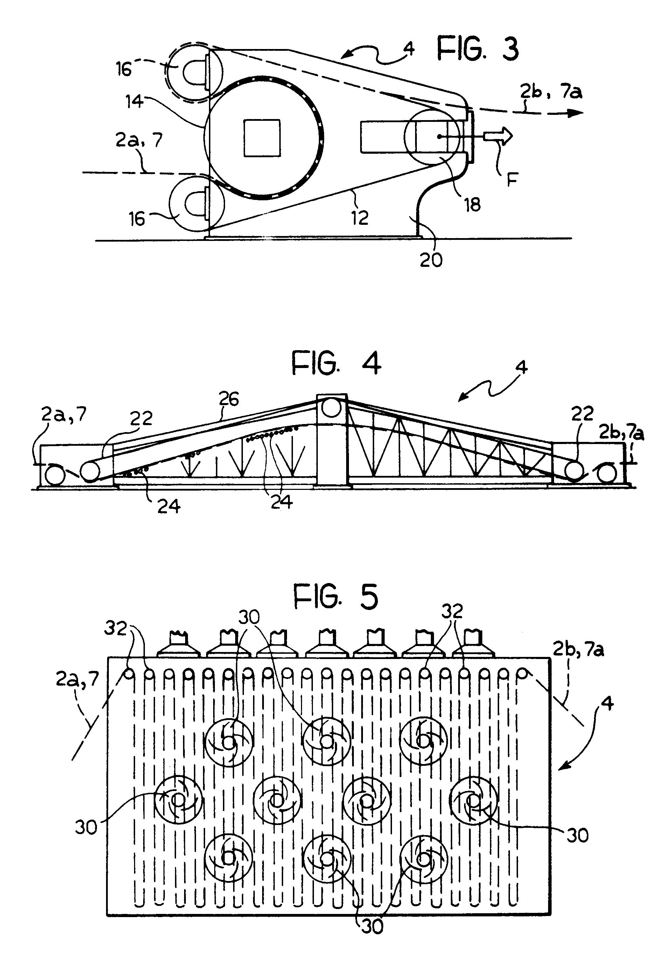

At the outlet from the first calender 3, the non-vulcanised backing sheet, indicated 2a, is supplied to a heating press or oven 4. The heating press may be of the type illustrated in Figure 3 or in Figure 4.

With reference to the solution illustrated in Figure 3, the non-vulcanised backing sheet 2a is in contact with a conveyor belt 12, for example of steel, which passes in a closed loop around a heating drum 14, two counter-rollers 16, and a tensioning roller 18. The drum 14 and the rollers 16 and 18 are supported by a structure 20 and are disposed so as to make the backing sheet 2a follow a circular path in contact with the heating drum 14. The tensioning roller 18 is urged in the direction of the arrow F so as to compress the sheet between the heating drum 14 and the conveyor belt 12. Clearly, the greater the force F applied to the tensioning roller 18, the higher the pressure with which the sheet 2a is kept pressed between the drum 14 and the conveyor belt 12.

In Figure 4, the backing sheet 2a is made to travel a curved path guided by a conveyor belt 22 and a plurality of rollers 24 placed beneath the conveyor belt 22. The latter is housed within a structure 26 in which a temperature suitable for ensuring total or partial vulcanisation (curing) of the product is maintained.

The variant of Figure 5 illustrates an oven 4 for vulcanising the sheet 2a without the sheet being squashed. The suitable temperature is maintained by the circulation of hot air by fans 30 and the sheet advances along a sinuous path supported by a plurality of rollers 32.

At the outlet of the heating press or oven 4, the vulcanised or partially-vulcanised backing sheet, indicated 2b, is passed to a second calender 5 which is also supplied simultaneously with a paste 6 of linoleum cement, fillers, cross-linking and accelerating agents. The sheet product 7 leaving the second calender 5 is supplied to a second heating press or oven 4 of the type described above, from which a finished sheet product 7a which is completely cross-linked and ready for use is obtained. The fact that the sheet 7 is not subjected to compression (use of the oven instead of the oven press) has the result of making a final product with a greater porosity than that which can be obtained with the pressers 3 and 4.

The second heating press or oven 4 may be used to complete the cross-linking of the backing sheet 2b so as to ensure its proper adhesion with the linoleum sheet.

The invention will now be described in greater detail with reference to the following examples, provided by way of non-limiting example, with reference to the various formulations of the product as well as different process conditions. The Examples 1 and 2 which follow relate to a linoleum provided with a fabric backing (which, per se, does not represent claimed subject matter).

EXAMPLE 1

The following formulations relate to a conventional linoleum cement containing, on average, 60% of linoxyn, 12% of colophony, 24% of calcium carbonate, and 4% of a drying agent.

Various formulations were tested and, with reference to 100 parts by weight of linoleum cement, had the contents given in Table 1 below.

TABLE 1 (formulations)

| | A | B | C | D | E | F | G | H | I | L |
|---|---|---|---|---|---|---|---|---|---|---|
| Cement | 100 | 100 | 100 | 100 | 100 | 100 | 100 | 100 | 100 | 100 |
| Cork | 30 | 65 | – | 20 | 20 | 20 | 20 | 20 | 10 | 10 |
| Wood flour | 66 | 47 | 70 | 50 | 50 | 50 | 50 | 50 | 60 | 60 |
| Titanium dioxide | 10 | 10 | 20 | 20 | 20 | 20 | 20 | 20 | 20 | 20 |
| Calcium carbonate | 40 | 40 | 40 | 40 | 40 | 40 | 40 | 40 | 40 | 40 |
| Zinc | 5 | 5 | 5 | 5 | 5 | 5 | 5 | 5 | 5 | 5 |
| Stearic acid | 1 | 1 | 1 | 1 | 1 | 1 | 1 | 1 | 1 | 1 |
| Calcium oxide | 1 | 1 | 1 | 1 | 1 | 1 | 1 | 1 | 2 | 10 |
| N-cyclohexyl-2-benzo-thiazylsulphenamide (CBS) | 2 | 2 | 2 | 2 | – | – | 1.5 | 1.5 | 2 | 2 |
| Tetraethylthiuram disulphide (TETD) | 1 | 1 | 1 | 1 | – | – | 1.0 | 1.0 | 1 | 1 |
| Sulphur | 3 | 3 | 3 | 3 | 3 | 3 | 0.6 | 0.6 | 3 | 3 |
| Dibenzothiazyldisulphide (MBTS) | – | – | – | – | 2 | 2 | – | – | – | – |
| Tetramethylthiuram monosulphide (TMTM) | – | – | – | – | 1 | 1 | – | – | – | – |
| (N,N')-diphenylguanidine (DPG) | – | – | – | – | 1 | 1 | – | – | – | – |
| (4,4')-dithiodimorpholine (DTDM) | – | – | – | – | – | – | 1.5 | 2.0 | – | – |

EXAMPLE 2

The sheet product obtained according to the formulations D, E, F, G and H in Example 1 were vulcanised with the use of the apparatus illustrated in the drawings. Operational conditions being kept constant, the characteristics of the final product remained almost constant despite the variations in the formulations. Table 2 below shows the variations in the characteristics of the final product with variations in

5

the operational conditions.

**TABLE 2 (Operating Conditions)**

| | | | | | | | | | | | | | | | |
|---|---|---|---|---|---|---|---|---|---|---|---|---|---|---|---|
| Temperature ($^{\circ}$C) | 110 | 110 | 130 | 130 | 150 | 150 | 110 | 110 | 110 | 110 | 110 | 170 | 200 | 80 | 60 |
| Time (minutes) | 60 | 60 | 30 | 30 | 10 | 10 | 60 | 60 | 60 | 60 | 60 | 5 | 5 | 120 | 240 |
| Pressure (kg/cm$^2$) (1 kg/cm$^2$ ≅ 96 kPa) | 1 | - | 1 | - | 1 | - | 0.5 | 1.5 | 2 | 200 | 40 | 1 | 1 | 1 | 1 |
| Punching mm 3.0 (DIN 51855) | 0.15 | 0.50 | 0.17 | 0.55 | 0.18 | 0.58 | 0.17 | 0.15 | 0.13 | 0.08 | 0.10 | 0.20 | 0.25 | 0.14 | 0.18 |
| Abrasion mm$^3$ | 450 | 600 | 460 | 610 | 480 | 630 | 500 | 450 | 400 | 300 | 350 | 650 | 700 | 445 | 560 |
| Flexibility (diameter of winding for 3.0 mm sheet) DIN 51849 | 45 | 50 | 45 | 50 | 45 | 55 | 50 | 40 | 40 | 35 | 40 | 55 | 60 | 40 | 50 |

As may be noted from Table 2, both the punching and abrasion values are better than the average values for a conventional linoleum. Moreover, the stability of shape, breaking strength and elongation of the linoleum obtained according to the method of the present examples are also better.

6

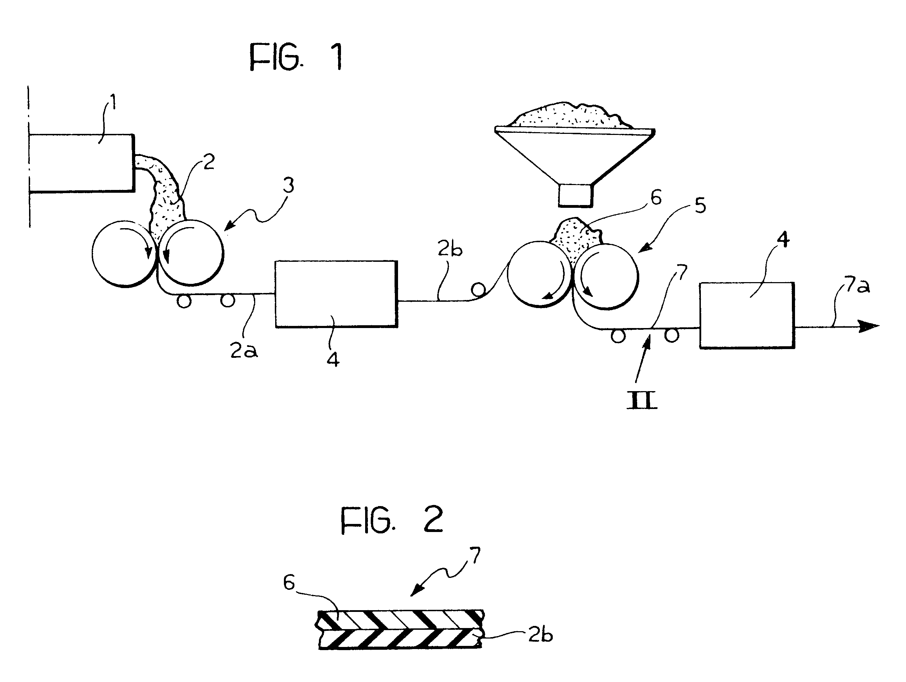

The following example relates to linoleum which does not have a fabric backing since, according to the invention, this has been replaced by a backing sheet with an elastomeric matrix, according to the method shown diagrammatically in Figure 1.

EXAMPLE 3

The following formulations of the backing sheet with the elastomeric matrix refer to a linoleum cement given in Example 1.

Various formulations were tested for the backing sheet and it was noted that, although the percentages of linoleum cement and synthetic or natural rubber were varied widely, the backing sheet still had good mechanical characteristics after cross-linking. The most significant formulations for the preparation of the backing sheet are given in Table 3 below, from which it is clear that the cross-linking and accelerating agents are shared by the elastomeric matrix and the linoleum matrix.

## TABLE 3

(Formulations used for the production of the elastomeric- and linoleum-based backing sheet)

|                        | A   | B   | C   | D   |
| ---------------------- | --- | --- | --- | --- |
| Linoleum cement        | 100 | 5   | 1   | 1   |
| SBR (1)                | 1   | 25  | 1   | 100 |
| Natural rubber         | 1   | 25  | 100 | 1   |
| Wood flour             | 80  | -   | -   | -   |
| Calcium carbonate      | 170 | -   | -   | -   |
| Zinc oxide             | 8   | -   | -   | -   |
| CBS (2)                | 3   | -   | -   | -   |
| Eveite (3)             | 1.2 | -   | -   | -   |
| Sulphur                | 6   | -   | -   | -   |
| High-styrene resin     | 10  | -   | -   | -   |
| Kaolin                 | 20  | -   | -   | -   |
| Working waste          | 20  | -   | -   | -   |
| Stearic acid           | 2   | -   | -   | -   |
| Coumarone or colophony | 2   | -   | -   | -   |
| Calcium oxide          | 1   | -   | -   | -   |

(1): styrene-butadiene rubber

(2): sulphenamide - primary accelerant

(3): tetramethylthiuram - secondary accelerant

EXAMPLE 4

With the use of the formulations of Example 3 and the production cycle described above and illustrated in the drawings, and also with the use of the times, temperatures and pressures given in Table 2 above (Example 2), it is possible to obtain a sheet product similar to conventional linoleum without the use of backing fabrics and which is perfectly workable without any problems of tearing of the sheet.

The following example compares the various type of linoleum obtainable by the methods disclosed in the foregoing with conventional linoleum matured for more than a year.

EXAMPLE 5

The following types of linoleum were subjected to punching tests at various time intervals:

A = Linoleum produced by accelerated cross-linking, cured (matured) in a press and provided with a jute backing fabric.

$A_1$ = Linoleum of type A, also subjected to maturing by oxidation in a conventional oven.

B = Linoleum of type A, without the jute backing but coupled to a rubber backing sheet vulcanised with it in a press (invention as claimed)

$B_1$ = Linoleum of type B, also subjected to maturing by oxidation in a conventional oven.

C = Linoleum produced by the conventional method without cross-linking and without vulcanising, and subjected solely to maturing by oxidation in a conventional oven.

D-E-F = Linoleum products made by the conventional method and matured for more than one year.

The punching data are given in the following table.

## TABLE 4

### Punching (mm)

| Product | Time 4 hours | 1 day | 2 days | 3 days | 4 days | 6 days | 7 days | 14 days |
|---|---|---|---|---|---|---|---|---|
| A | 0.095 | 0.085 | – | – | 0.070 | – | 0.060 | 0.065 |
| A$_1$ | – | 0.070 | 0.065 | 0.050 | 0.050 | – | 0.050 | 0.035 |
| B | 0.070 | 0.060 | – | – | 0.055 | 0.050 | – | 0.06 |
| B$_1$ | – | 0.070 | 0.060 | 0.050 | 0.045 | 0.035 | – | 0.03 |
| C | pierced | – | – | pierced | – | pierced | pierced | 0.25 |

| Product | | |
|---|---|---|
| D | more than one year: | 0.070 mm |
| E | " " | 0.15 " |
| F | " " | 0.15 " |

As may be seen from Table 4, the linoleum produced according to the invention had characteristics of impressibility comparable with those of conventional products matured for more than a year.

The values of dimensional stability were also good, as shown by the following table.

EP 0 385 053 B1

TABLE 5

| (dimensional stability) | |
| --- | --- |
| Product | |
| Dimensional variation (DIN 51962) | |
| Linoleum vulcanised on jute | 0.17% |
| Conventional linoleum on jute | 0.15% |
| Linoleum vulcanised on sheet rubber (without jute) | 0.17% |

Whenever the backing sheet is coupled to a sheet resulting from a paste linoleum cement and fillers further including cross-linking or accelerating agents, it is possible to obtain the finished product from the vulcanising press after a cycle which may fluctuate between 5 and 10 minutes.

**Claims**

1. A method for the production of a sheet covering of the linoleum type, including the steps of oxidising a natural oil, adding to the oxidised oil additives selected from the group consisting of colophony, calcium carbonate, cork, wood flour and titanium oxide, and calendering upon a backing sheet the paste thus obtained to form a sheet product, wherein
   a) cross-linking and accelerating agents are added to the paste before the calendering and, after the calendering, the sheet product is heated for a time sufficient to cure it and
   b) the backing sheet is made by calendering a mixture (2) including, in addition to a curable elastomeric material, a material resulting from the oxidation of a natural oil together with additives selected from the group consisting of colophony, calcium carbonate, cork, wood flour and titanium oxide, the backing sheet (2b) subsequently being heated for a time sufficient to cure it.

2. A method according to Claim 1, characterised in that the sheet product is heated to a temperature of between 60° and 200°C.

3. A method according to Claim 1 or claim 2, characterised in that, after calendering, the sheet product is subjected to a pressure of between $4.8x10^4$ and $1.96x10^7$ Pa (0.5 and 200 kg/cm$^2$).

4. A method according to Claim 1, characterised in that the accelerating agents and the cross-linking agents are selected form the group consisting of: calcium oxide, zinc, zinc oxide, stearic acid, sulphur, N-cycloehexyl-2-benzothiazylsulphenamide, tetraethylthiuram disulphide, di-(2,2'-benzo-thiazolyl-) disulphide, tetramethylthiuram monosulphide, (N,N')-diphenylguanidine, 4,4'-dithiodimorpholine.

5. A method according to Claim 1 or claim 4, characterised in that the curing time of the sheet product is between 5 and 240 minutes.

6. A method according to Claim 1, characterised in that, before the calendering, the paste is mixed with a vulcanisable rubber.

7. A method according to Claim 1, characterised in that, after the sheet product (7) obtained from the paste has been calendered upon the backing sheet (2b), both sheets are heated for a time sufficient to cure them.

8. A method according to Claim 1, characterised in that the material resulting from the oxidation of a natural oil, used as a component for the manufacture of the backing sheet, has cross-linking agents and accelerating agents added to it.

9. A method according to Claim 1 characterised in that it includes the following steps:
   - supplying to a first calender (3) a mixture (2) including an oxidized natural oil to which there have subsequently been added additives selected from the group consisting of colophony, calcium carbonate, cork, wood flour, titanium oxide, cross-linking agents, accelerating agents, and a curable elastomeric material,

11

- heating the sheet material (2a) leaving the first calender for a time sufficient to cure it,
- supplying the cured sheet (2b) to a second calender (5) which is also supplied with and oxidised natural oil (6) to which there have subsequently been added additives selected from the group consisting of colophony, calcium carbonate, cork, wood flour, titanium oxide, cross-linking agents and accelerating agents, and
- heating the sheet product (7) leaving the second calender (5) for a time sufficient to cure it.

## Patentansprüche

1. Verfahren zur Herstellung eines Schichtbelages in der Art von Linoleum, umfassend die Schritte: Oxidieren eines natürlichen Öls, Zugeben von Zusätzen aus der Gruppe umfassend Kolophonium, Calciumcarbonat, Kork, Holzmehl und Titanoxid zum oxidierten öl, und Aufbringen der so erhaltenen Paste auf eine Unterlagsschicht durch Kalandrieren zur Herstellung eines Schichtproduktes, wobei
   a) Vernetzungsmittel und Beschleuniger vor dem Kalandrieren der Paste zugegeben werden und das Schichtprodukt nach dem Kalandrieren über einen Zeitraum erwärmt wird, der für seine Härtung ausreicht, und
   b) die Unterlagsschicht durch Kalandrieren einer Mischung (2) hergestellt wird, welche zusätzlich zu einem härtbaren elastomeren Material ein Material enthält, welches durch die Oxidation eines natürlichen Öls zusammen mit Zusätzen aus der Gruppe umfassend Kolophonium, Calciumcarbonat, Kork, Holzmehl und Titanoxid entsteht, wobei die Unterlagsschicht (2b) anschließend über einen Zeitraum erwärmt wird, der für ihre Härtung ausreicht.

2. Verfahren nach Anspruch 1, dadurch gekennzeichnet, daß das Schichtprodukt auf eine Temperatur zwischen 60° und 200° C erwärmt wird.

3. Verfahren nach Anspruch 1 oder 2, dadurch gekennzeichnet, daß das Schichtprodukt nach dem Kalandrieren einem Druck zwischen $4,8 \times 10^4$ und $1,96 \times 10^7$ Pa (0,5 und 200 kg/cm$^2$) unterworfen wird.

4. Verfahren nach Anspruch 1, dadurch gekennzeichnet, daß die Beschleuniger und Vernetzungsmittel ausgewählt werden aus der Gruppe umfassend: Calciumoxid, Zink, Zinkoxid, Stearinsäure, Schwefel, N-Cyclohexyl-2-benzothiazylsulfenamid,Tetraethylthiuramdisulfid, Di-(2,2'-benzothiazolyl-) disulfid, Tetramethylthiurammonosulfid, (N,N')-Diphenylguanidin, 4,4'-Dithiodimorpholin.

5. Verfahren nach Anspruch 1 oder 4, dadurch gekennzeichnet, daß die Zeit für das Härten des Schichtproduktes zwischen 5 und 240 Minuten beträgt.

6. Verfahren nach Anspruch 1, dadurch gekennzeichnet, daß die Paste vor dem Kalandrieren mit einem vulkanisierbaren Gummi gemischt wird.

7. Verfahren nach Anspruch 1, dadurch gekennzeichnet, daß nach dem Aufbringen des aus der Paste erhaltenen Schichtproduktes (7) auf die Unterlagsschicht (2b) beide Schichten über einen Zeitraum erwärmt werden, der für ihre Härtung ausreicht.

8. Verfahren nach Anspruch 1, dadurch gekennzeichnet, daß zum Material, welches durch die Oxidation eines natürlichen Öls entsteht und als Bestandteil für die Hertsellung der Unterlagsschicht verwendet wird, Vernetzungsmittel und Beschleuniger gegeben werden.

9. Verfahren nach Anspruch 1, dadurch gekennzeichnet, daß es die folgenden Schritte umfaßt:
   - Zuführen einer Mischung (2) zu einem ersten Kalander(3), welche ein oxidiertes Öl enthält, dem dann Zusätze aus der Gruppe umfassend Kolophonium, Calciumcarbonat, Kork, Holzmehl, Titanoxid, Vernetzungsmittel, Beschleuniger, sowie ein härtbares elastomeres Material zugegeben wurden,
   - Erwärmen des den ersten Kalander verlassenden Schichtmaterials (2a) über einen Zeitraum, der für seine Härtung ausreicht,
   - Zuführen der gehärteten Schicht (2b) zu einem zweiten Kalander (5), welcher auch mit einem oxidierten Öl (6) beschickt wird, dem dann Zusätze aus der Gruppe umfassend Kolophonium, Calciumcarbonat, Kork, Holzmehl, Titanoxid, Vernetzungsmittel und Beschleuniger zugegeben wurden, und

- Erwärmen des den zweiten Kalander (5) verlassenden Schichtproduktes (7) über einen Zeitraum, der für seine Härtung ausreicht.

**Revendications**

1. Procédé pour la fabrication d'un revêtement en feuilles du type linoleum, comprenant les étapes d'oxydation d'une huile naturelle, d'incorporation à l'huile oxydée d'additifs choisis parmi l'ensemble comprenant la colophane, le carbonate de calcium, le liège, la farine de bois et l'oxyde de titane, et de calandrage de la pâte ainsi obtenue sur une feuille de renfort pour obtenir un produit en feuilles, dans lequel

a) des agents de réticulation et d'accélération sont ajoutés à la pâte avant le calandrage et, après le calandrage, le produit en feuilles est chauffé pendant un temps suffisamment long pour le durcir,

b) la feuille de renfort est élaborée par calandrage d'un mélange (2) comprenant, en plus d'un matériau élastomère durcissable, un matériau résultant de l'oxydation d'une huile naturelle avec des additifs choisis dans le groupe formé par la colophane, le carbonate de calcium, le liège, la farine de bois et l'oxyde de titane ; la feuille de renfort (2b) étant ensuite chauffée pendant un temps suffisant pour la durcir.

2. Procédé selon la revendication 1, caractérisé en ce que le produit en feuilles est chauffé à une température comprise entre 60 et 200 ° C.

3. Procédé selon la revendication 1 ou 2, caractérisé en ce que, après calandrage, le produit en feuilles est soumis à une pression comprise entre $4,8 \times 10^4$ et $1,96 \times 10^7$ Pa (0,5 et 200 kg/cm$^2$).

4. Procédé selon la revendication 1, caractérisé en ce que les agents de réticulation et les agents d'accélération sont choisis parmi le groupe formé par l'oxyde de calcium, le zinc, l'oxyde de zinc, l'acide stéarique, le soufre, la N-cyclohexyl-2-benzothiazylsulfènamide, le bisulfure de tétraéthylthiurame, le bisulfure de di-(2,2' )-benzothiazolyle, le monosulfure de tétraméthylthiurame, la (N,N')-diphénylguanidine, la 4,4'-dithiodimorpholine.

5. Procédé selon la revendication 1 ou 4, caractérisé en ce que le temps de durcissement du produit en feuilles est compris entre 5 et 240 minutes.

6. Procédé selon la revendication 1, caractérisé en ce que la pâte est mélangée, avant calandrage, à du caoutchouc vulcanisable.

7. Procédé selon la revendication 1, caractérisé en ce que, après que le produit en feuilles (7) obtenu à partir de la pâte ait été calandré sur la feuille de cuisson (2b), les deux feuilles sont chauffées ensemble pendant un temps suffisant pour les durcir.

8. Procédé selon la revendication 1, caractérisé en ce que le matériau résultant de l'oxydation d'une huile naturelle, utilisé comme composant pour la fabrication de la feuille de renfort, comporte des agents de réticulation et des agents d'accélération qui lui sont ajoutés.

9. Procédé selon la revendication 1, caractérisé en ce qu'il comprend les étapes suivantes :

- alimentation d'une première calandreuse (3) par un mélange (2) comprenant une huile naturelle oxydée à laquelle on a ensuite inclus des additifs choisis dans le groupe formé par la colophane, le carbonate de calcium, le liège, la farine de bois, l'oxyde de titane, des agents de réticulation, des agents d'accélération et un matériau élastomère durcissable,
- chauffage du matériau en feuilles (2a) en sortie de la première calandreuse pendant un temps suffisant pour le durcir,
- alimentation, par la feuille durcie (2a), d'une seconde calandreuse (5) qui est également alimentée en huile naturelle oxydée(6) à laquelle ont été rajoutés des additifs choisis dans le groupe formé par la colophane, le carbonate de calcium, le liège, la farine de bois, l'oxyde de titane, des agents de réticulation et des agents d'accélération, et
- chauffage du proudit en feuilles (7) en sortie de la deuxième calandreuse (5) pendant un temps suffisant pour le durcir.

FIG. 1

FIG. 2

FIG. 3

FIG. 4

FIG. 5